# EUROPEAN PATENT APPLICATION

(11) **EP 4 564 122 A1**
(43) Date of publication of application: **04.06.2025**
(21) Application number: 23213067.4
(22) Date of filing: 29.11.2023
(51) Int. Cl.: G05D 16/00, F16K 31/00, G05D 16/20

(54) **PNEUMATIC GAS INLET VALVE**

(71) Applicant: VAT Holding AG, 9469 Haag (CH)
(72) Inventor: ESCHENMOSER, Adrian, 9470 Werdenberg (CH); HOFER, Andreas, 7000 Chur (CH); DÜR, Michael, 6914 Hohenweiler (AT); LORETZ, Patrick, 6820 Frastanz (AT)
(74) Representative: Kaminski Harmann

(57) **Abstract**

The invention relates to a gas inlet system (10) for controlled inlet of a fluid into a vacuum process chamber (3), wherein the gas inlet system (10) comprises a gas inlet valve (20) with a gas passage unit having an inner volume, wherein the gas passage unit comprises a sealing surface in the inner volume. The gas inlet valve (20) further comprises an adjustment element projecting into the inner volume and having a valve disk which is arranged inside the inner volume, a drive unit which is coupled to the adjustment element outside the gas passage unit and provides an adjustment of the adjustment element along an adjustment axis and a flexible sealing membrane which is attached to the gas passage unit and to the adjustment element and atmospherically separates the drive unit from the inner volume. The drive unit comprises a pneumatic drive cylinder, and the gas inlet valve (20) comprises a restoring element configured and arranged to apply a restoring force on the adjustment element. The gas inlet system (10) comprises a pressurization unit (40) connected to the drive cylinder for defined pressurization of the drive cylinder, wherein the pressurization unit (40) is configured to provide variable pressure and to vary and set an inside pressure of the drive cylinder, and a controlling unit (50) configured to receive a controlling parameter providing a target state for the gas inlet system (10), and to control the pressurization unit (40) based on the controlling parameter so that the inside pressure of the drive cylinder is varied so that an actual state of the gas inlet system is approached to the target state or corresponds with the target state.

## Description

### FIELD OF INVENTION

The present invention relates to a gas inlet system for providing a fluid into a vacuum process chamber.

### BACKGROUND OF THE INVENTION

Such vacuum process chambers are used for integrated circuit (IC), semiconductor, flat panel or substrate manufacturing, wherein the vacuum chambers are flooded with a process gas after evacuation for at least part of the process steps. The manufacturing process must take place in a protected atmosphere and, if possible, without the presence of contaminating particles. Evacuation takes place using a vacuum valve, which connects the vacuum process chamber to a vacuum pump and which vacuum valve differs from a gas inlet valve in its design and technical requirements.

Furthermore, such vacuum chambers have at least one or two vacuum chamber openings through which the elements to be processed, e.g. a wafer, can be guided into and/or out of the vacuum chamber. For example, in a production system for semiconductor wafers or liquid crystal substrates, the highly sensitive semiconductor or liquid crystal elements pass sequentially through several vacuum process chambers in which the elements are processed by means of a processing device in each case.

For example, the element can be placed on extended support pins of a lifting system by means of a robot and deposited on a support, e.g. a potential plate (chuck), by lowering the support pins. After that, the robot arm, which typically carries the element, is moved out of the chamber. The pins can be lowered after the element has been deposited and are then separate from the element, i.e. there is no contact between the pins and the element. After removing the robot arm and closing the chamber, the chamber is usually evacuated and then filled with a process gas, whereupon processing of the element can start.

Gas inlet valves are designed, in particular, for defined control or regulation of the gas flow and are located, for example, within a pipe system between a vacuum process chamber (or a transfer chamber) and a gas source, the atmosphere or another vacuum process chamber. The opening cross-section of such gas inlet valves is usually smaller than that of a vacuum valve.

Depending on the application, gas inlet valves can be used not only to fully open and close an opening, but also to control or regulate a flow by continuously adjusting the opening cross-section between an open position and a gas-tight closed position. Such regulation approaches can be provided by electromechanically driven gas inlet valves.

When admitting the process gas into the vacuum chamber, low fluidic effects within the chamber as well as fast and precise filling of the chamber are of great importance. For example, a defined quantity or volume of a defined process gas is to be admitted into the chamber with one opening cycle of the gas inlet valve. For this purpose, on the one hand, a fast actuation of the valve as well as a precise adjustment of the valve opening cross-section provided in the process is desirable.

While an electromechanically driven gas inlet valve can provide regulation of a fluid flow, a disadvantage of an electromechanically driven gas inlet valve - compared to a pneumatic gas inlet valve - is the increased time consumption required to move the valve from a closed state into an opened state. Moreover, in context of e.g. plasma processing in the vacuum chamber, a further disadvantage is related to their typical influence on substrate processing due to generation and variation of electromagnetic fields for moving the valve.

### OBJECT OF THE INVENTION

It is therefore an object of the present invention to provide a gas inlet system which enables rapid opening and closing of fluid passage together with a capability of regulating the fluid flow.

A particular object of the invention is to provide a gas inlet system which provides to vary fluid flow by reducing or avoiding influencing a vacuum processing cycle.

These objects are solved by the realization of the characterizing features of the independent claim. Features which further form the invention in an alternative or advantageous manner are to be taken from the dependent claims.

### SUMMARY OF THE INVENTION

The invention is based on the idea to combine fast movement of a valve disk of a gas inlet valve with a proper controlling or regulation of the valve disk. Hence, the inlet valve can provide both advantages of rapid opening and closing of the valve and of varying a flow rate through the valve. To further avoid electromagnetic interaction between the gas inlet system and processing of a substrate it is proposed to design the gas inlet valve as a pneumatically driven gas inlet valve.

Typical pneumatic drives provide a pneumatic actuator that creates rotary or linear motion using compressed air. It provides simple back and forth action of a single stroke piston. Such cylinders typically have no flexibility in their movement profile, and no ability to regulate e.g. an amount of force applied.

It is thus proposed to convert a traditional pneumatic gas inlet valve into a servo pneumatic gas inlet valve to enable the drive to adjust the piston position into a desired position between the two ends of a movability of the piston in the pneumatic drive cylinder.

Traditional gas inlet valves provided rapid point-to-point motion at high force. A servo pneumatic gas inlet valve offers the same capabilities in force and speed, but has the added advantage of greater positioning accuracy, e.g. via a feedback loop. This applies not only to the position of the servo pneumatic gas inlet valve at each end of the stroke, but to points in between along the trajectory of the piston.

The invention relates to a gas inlet system for controlled inlet of a fluid into a vacuum process chamber, wherein the gas inlet system comprises a gas inlet valve.

In the context of the present invention, fluid is understood to be at least a gas, a gas mixture, a liquid, a precursor-containing gas or a gas-liquid mixture. In particular, the fluid may be a process gas or precursor gas.

The gas inlet valve comprises a gas passage unit having a gas inlet, a gas outlet and an inner volume connecting the gas inlet and the gas outlet, wherein the gas passage unit comprises a sealing surface in the inner volume. The valve further comprises an adjustment element projecting into the inner volume and having a valve disk which is arranged inside the inner volume, wherein the adjustment element is movably mounted along an adjustment axis in a closing direction and in an opening direction.

A drive unit is provided which is coupled to the adjustment element outside the gas passage unit and provides an adjustment of the adjustment element along the adjustment axis. The valve disk is movable by means of the drive unit in the opening direction into an open position in which the valve disk is spaced from the sealing surface and a fluid flow is provided. A flexible sealing membrane which is attached to the gas passage unit and to the adjustment element atmospherically separates the drive unit from the inner volume.

The drive unit comprises a pneumatic drive cylinder having at least one piston, wherein the piston is coupled to the adjustment element and an opening force can be generated in the opening direction by pressurization of the drive cylinder. The gas inlet valve comprises a restoring element configured and arranged to apply a restoring force on the adjustment element and/or on the piston in a closing direction.

The valve disk and/or the valve seat (sealing surface) can have a sealing ring which is compressed in the closed position. The compression is provided by pretensioning of the restoring element and ensures that the gas inlet can be separated from the gas outlet in a gas-tight manner.

The gas inlet system comprises a pressurization unit connected to the drive cylinder for defined pressurization of the drive cylinder, wherein the pressurization unit is configured to provide variable pressure and to vary and set an inside pressure of the drive cylinder.

The system further comprises a controlling unit configured to receive a controlling parameter providing a target state for the gas inlet system, and to control the pressurization unit based on the controlling parameter so that the inside pressure of the drive cylinder is varied so that an actual state of the gas inlet system is approached to the target state or corresponds with the target state.

Therefore, the gas inlet system provides a pneumatically driven gas inlet valve capable to not only changing states between opened and closed but which can be brought into individual intermediate states between an open position and a closed position. This can be provided by an interaction of the restoring element and variable pressure inside the drive cylinder.

In one embodiment, the pressurization unit can be provided by a servo valve or proportional pneumatic valve. This can regulate air delivery with great precision to ensure that the required force or position is achieved.

A proportional pneumatic valve can be configured to permit gas or air to flow through a first gas line into a first chamber (drive cylinder) of the pneumatic drive unit. The pressure in the first gas line can be measured with a first pressure sensor.

In particular, the proportional pneumatic valve can be configured to permit gas or air to flow through a second gas line into a second chamber of the pneumatic drive and the pressure in the second gas line can be measured with a second pressure sensor. Alternatively or additionally, the second chamber can be vented and e.g. ambient air can flow into and out of the second chamber.

In addition, a position of a moving member (piston) of the pneumatic drive can be measured with a position sensor. By use of a servo-control system in the proportional valve a defined position of the moving member can be provided by setting a defined counterforce acting against the restoring element.

In one embodiment, the gas inlet valve can comprise a position sensor that monitors the position of the piston in the pneumatic cylinder throughout the stroke. The gas inlet valve can further include a pressurization unit which is provided by a proportional pressure control valve with pressure feedback from both sides of the pneumatic cylinder. This could be implemented with a single 5/2 spool valve style proportional valve or by two separate pressure control proportional valves. Each side of the pneumatic cylinder can include a pressure sensor. The proportional pressure control valve allows a varying flow and pressure to be controlled on each side of the pneumatic cylinder. The controlling unit can control a force output (acting against the restoring element) by adjusting the delta pressure between the two sides.

According to one embodiment, the controlling parameter can comprise information about a target pressure of the fluid in the chamber and the actual state indicates a current fluid pressure in the vacuum process chamber. In particular, the gas inlet system can comprise the vacuum process chamber and at least one pressure sensor for determining the fluid pressure in the chamber.

By that, a regulation of the inlet valve can be established wherein the chamber pressure is used as a feedback information and a fluid flow through the valve is controlled only on basis of the target pressure and the actual pressure. As for example, the fluid flow can be provided as a function of the difference between the target pressure and the actual pressure.

In particular, the controlling parameter can (also) comprise a fluid supply pressure and the target pressure and the controlling unit is configured to control the pressurization unit so that a defined amount of fluid passes the gas passage unit depending on the fluid supply pressure to approach the target pressure. By considering the fluid supply pressure an increase of the chamber pressure can be controlled more precisely.

In one embodiment, the controlling parameter can comprise information about a target flow factor through the gas inlet valve and the pressurization unit is controlled so that an actual flow factor through the gas inlet valve is approached to the target flow factor or corresponds with the target flow factor. The actual flow factor through can be measured by a flow sensor.

Alternatively or additionally, particular flow factors of the valve can be calibrated with particular positions of the piston, in particular as a function of particular pressures of the fluid. Accordingly, the position of the piston can be controlled to provide a particular flow factor.

In one embodiment, the gas inlet system can comprise a mass flow meter arranged to measure the fluid flow in front of the gas inlet valve, i.e. to measure an amount of fluid which flows into the valve. Alternatively or additionally, the mass flow meter can be arranged to measure the fluid flow behind the gas inlet valve, i.e. measuring an amount of fluid which exits the valve. The mass flow meter can provide respective flow information. The controlling parameter can comprise the flow information. Hence, the gas inlet valve can be controlled to provide a particular fluid flow through the valve.

In one embodiment, the controlling parameter can comprise a target position of the adjustment element or of the piston and the pressurization unit is controlled so that an actual position of the adjustment element or of the piston is approached to the target position or corresponds with the target position.

In one embodiment, the gas inlet system can comprise a position sensor which is configured and arranged to determine the actual position of the adjustment element or of the piston and to provide respective actual position data to the controlling unit. The pressurization unit can be controlled by the controlling unit based on the actual position data and the target position.

In one embodiment, the controlling unit can be configured to derive an operating state of the flexible sealing membrane and/or of the valve disk based on a relation of an actual inside pressure of the drive cylinder and the actual position.

In particular, the controlling unit can be configured to derive the opening force and to derive a force-distance information related to the valve disk.

By that, an actual state regarding operational reliability of the inlet valve can be derived. Respective information can also be used for predictive maintenance, e.g. to determine an instance in time to replace respective working parts like the flexible sealing membrane.

In one embodiment, the pressurization unit can be controlled so that the gas passage unit provides a defined distance between the valve disk and the sealing surface. By that, an opening cross section can be varied to precisely control the fluid flow through the valve.

In one embodiment, the controlling parameter can comprise a target pressurization value concerning a target inside pressure of the drive cylinder and the pressurization unit can be controlled to provide the target inside pressure of the drive cylinder. Regulating or controlling of the inlet valve can thus be provided purely on basis of pressure.

In one embodiment, the controlling unit can comprise a monitoring functionality configured to collect pressurization data for a defined time period, in particular inside pressure values, and derive an operating state of the gas inlet valve based on a comparison of the pressurization data with nominal pressurization data. The data can preferably be derived for a plurality of processing cycles. Hence, the system can provide to continuously monitor the inlet system and to generate or update operation data to indicate operation reliability or precision.

### BRIEF DESCRIPTION OF THE DRAWINGS

Further advantages of the present invention are apparent from the detailed description and drawings.
Fig. 1 shows an embodiment of a gas inlet system according to the invention.
Figs. 2a and 2b show a sectional view of an embodiment of a gas inlet valve of a gas inlet system according to the invention.

### DETAILED DESCRIPTION OF THE DRAWINGS

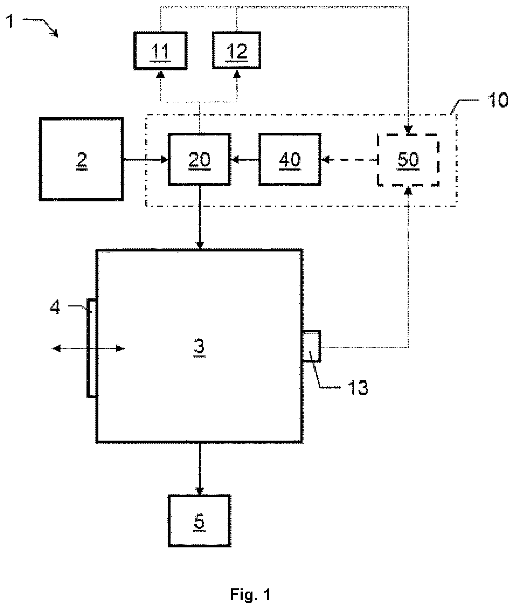

Figure 1 shows a vacuum processing system 1 which comprises a vacuum process chamber 3 with a vacuum valve 4, a vacuum pump 4 and a gas inlet system 10 according to the invention. The vacuum valve 4 is embodied as a vacuum transfer valve to provide deposition and extraction of a substrate to be processed into and out of the chamber 3. The vacuum pump 5 provides to evacuate the chamber 3 to provide a particular vacuum pressure or low pressure inside of the chamber 3.

The vacuum pump 5 typically can be connected with the vacuum chamber 3 via a vacuum regulation valve (not shown).

Furthermore, a reservoir 2 which contains a processing fluid is provided and connected with a gas inlet valve 20 of the gas inlet system 10 to provide defined amounts of the processing fluid in the chamber 3.

The gas inlet valve 20 is configured to provide a particular amount of processing fluid into the processing chamber 3. The gas inlet valve 20 can be controlled to provide passage of the processing fluid for a defined time with through a defined opening cross section. Hence, a defined flow rate can be provided for a defined time period.

The gas inlet valve 20 is configured as a pneumatic gas inlet valve having a drive unit with a pneumatic drive cylinder. By applying particular pressure inside the pneumatic drive cylinder, the gas inlet valve 20 can be opened. The gas inlet valve 20 also comprises a restoring element, e.g. a spring, which applies a closing force to keep the gas inlet valve 20 closed when the pressure inside the pneumatic drive cylinder is low.

An embodiment of a gas inlet valve 20 of the gas inlet system 10 is shown and described in more detail below.

The gas inlet system 10 also comprises a pressurization unit 40 which is connected to the drive cylinder of the gas inlet valve 20. The pressurization unit 40 is configured to apply a defined pressure at the drive cylinder, wherein the applied pressure can be varied by the pressurization unit.

The pressurization unit 40 can be embodied as a proportional valve which allows to regulate air delivery with great precision to ensure that a required force or position of a moving member (piston) of the valve is achieved.

A controlling unit 50 is connected with the pressurization unit 40 to control and/or regulate the pressure applied to the gas inlet valve 20. The controlling unit 50 typically receives a controlling parameter which provides a target state for the gas inlet system 10, i.e. a state which should be provided by the gas inlet system, in particular by the gas inlet valve 20. The controlling unit 50 further controls the pressurization unit 40 based on the controlling parameter so that the inside pressure of the drive cylinder is varied so that an actual state of the gas inlet system is approached to the target state or so that the actual state of the gas inlet system corresponds with the target state.

Such advantageous controlling of the inlet valve 20 allows to determine a particular amount of processing fluid per time to flow into the process chamber 3. The flow rate can be varied and/or set to a particular value by applying a respective pressure by means of the pressurization unit 40.

Traditional pneumatics gas inlet valves provide comparatively rapid point-to-point motion at high force. A controlled pneumatic drive according to the invention (also called servo pneumatic drive) offers the same capabilities in force and speed but has the added advantage of particular positioning of the drive between a starting (set) point and an end point of the drive movement.

In addition, high accuracy concerning particular positioning can be provided. This applies not only to the position of the drive (actuator) at each end of the stroke, but to points in between along the trajectory of the piston.

Moreover, the servo pneumatic cylinder does not fully exhaust the compressed air during its operation, thus enabling a significant reduction in air consumption over standard pneumatic systems.

As a further advantage, the servo pneumatic drive also enables to monitor and regulate the system's air pressure, controlling the air supply and flow according to the required force and position of the actuator, and enabling more precise force-torque control.

For that, the system of figure 1 comprises further sensor units 11 and 12. To acquire position information concerning the piston or valve disk of the valve 20 the inlet valve 20 comprises a position sensor 11. Further, a pressure sensor 12 is provided to measure the inside pressure on the drive cylinder. Hence, both sensors 11 and 12 can provide feedback information regarding the gas inlet valve 20.

The feedback information is transmitted to the controlling unit 50. The controlling unit 50 is configured to receive and process the feedback information.

Processing of the feedback information together with processing of the controlling parameter provides to establish a feedback-controlled system by means of the gas inlet system 10 which provides controlled operation of the pneumatic driven gas inlet valve 20. As for example, a preferred position of the valve disc, i.e. a preferred opening cross section, is provided as the controlling parameter and the drive cylinder of the gas inlet valve 20 is pressurized until a measurement by the position sensor corresponds with the preferred position.

Furthermore, the vacuum processing system 1 comprises a pressure sensor 13 arranged at the processing chamber 3 to measure an inside pressure of the chamber 3. The pressure information provided by sensor 13 can also be used as a feedback signal to control or regulate the gas inlet valve 20. The gas inlet valve may be controlled to increase the pressure inside the chamber 3 by providing processing fluid until a defined pressure threshold (controlling parameter) is met.

In particular, the controlling parameter may comprise a plurality of setpoints comprising time and pressure pairings. The controlling parameter may even comprise a desired time-pressure-development inside the chamber 3 for a particular processing cycle. Hence, the gas inlet valve 20 can be controlled to provide particular pressures inside the chamber at particular time steps.

The feedback information provided by the pressure sensor 13 may be used in combination with the feedback information of the sensor units 11 and 12. Alternatively, the information can be used separately or individually.

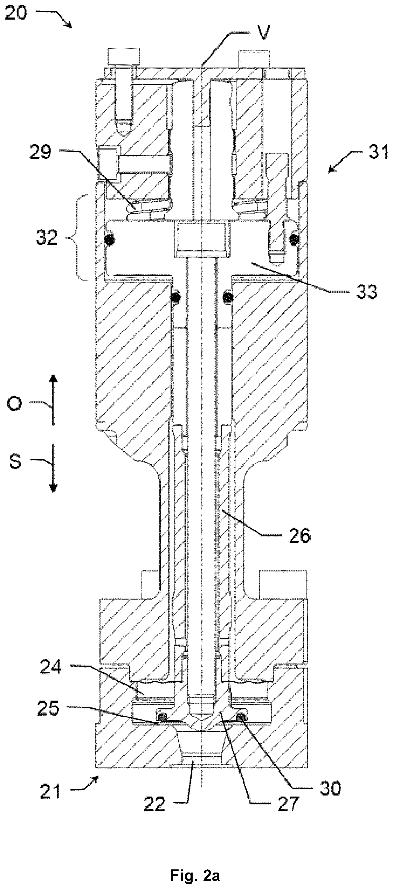

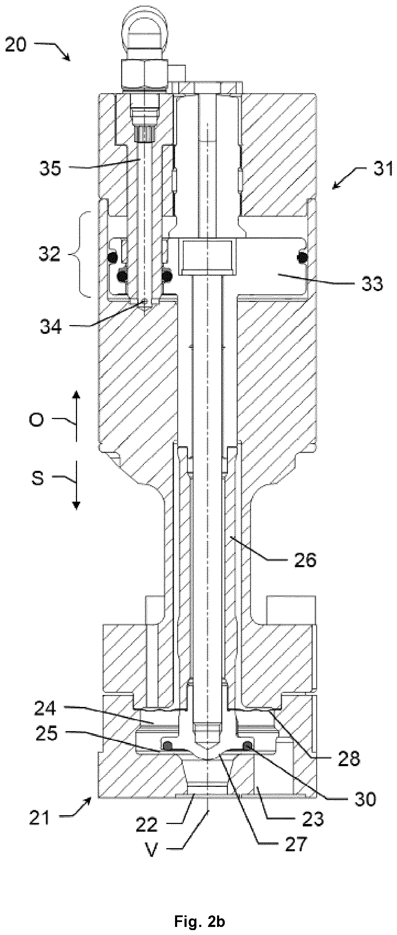

Figures 2a and 2b show an exemplary embodiment of a gas inlet valve 20 according to the invention. Fig. 2a shows the valve rotated by 90° about the adjustment axis V relative to the representation in Fig. 2b. The gas inlet valve 1 has a gas passage unit 21, which in turn has a gas inlet 22, a gas outlet 23 and an inner volume 24, wherein the inner volume 24 has free access to the gas inlet 22 and to the gas outlet 23 or connects them. Further, the gas passage unit 21 comprises a sealing surface 25 in the inner volume 24.

The gas inlet valve 20 also comprises an adjustment element 26 and a valve disk 27, wherein the adjustment element 26 projects into the inner volume 24 and is adjustably mounted to a drive unit 31 outside the gas passage unit 21. The valve disk 27 is arranged inside the inner volume 24 and can be brought into a closed position in which the disk 27 rests on the sealing surface 25 and thus prevents gas from passing through. By means of the drive unit 31, the disk 27 can also be brought into an open position, in which the disk 27 is spaced from the sealing surface 25 (as shown) and thus allows gas to pass through the inner volume 24.

The gas inlet valve 20 also comprises pretensioning or restoring elements 29 in the form of springs. The springs 29 are arranged in a pretensioned manner in the drive unit in such a way that it exerts a force in the direction of the valve seat 25 and presses the adjustment element 26 or the valve disk 27 onto the sealing surface 25, i.e. in the closing direction S.

By the pretensioning in the spring or several springs, the disk 27 is pressed against the sealing surface 25 in a closed position. Here, a sealing ring 30 serves as a gas-tight seal. This sealing ring 30 consists in particular of an elastomer, thermoplastic, metal, etc., can have a shape adapted to the shape of the valve disk (e.g. an O-ring), or can be vulcanized onto the valve disk.

The sealing ring may be disposed on the valve disk 27 (as shown here), or it may be disposed on the sealing surface 25 (according to other embodiments).

Furthermore, the drive unit 31 comprises a pneumatic drive cylinder 32 for applying an opening force counteracting the pretensioning force and thus providing an opening movement of the valve disk 27. In the embodiment shown, the drive cylinder 32 has a piston 33, wherein the piston 33 is coupled to the adjustment element 26 and an opening movement of the adjustment element 26 can be generated by applying pressure to the drive cylinder 32.

In the embodiment shown, the restoring element 29 interacts with the piston 33 and presses it in the closing direction S.

The gas inlet valve 20 further comprises a flexible sealing membrane 28, which in the example shown is designed as a membrane made of or comprising metal, in particular is designed as a metal diaphragm. The sealing membrane 28 is attached to the gas passage unit 21 and to the adjustment element 26 and thus seals the inner volume 24.

The membrane 28, which is designed as a flexible sealing element, provides a flexible seal of the inner volume 24 with respect to the drive unit 31. In particular, the membrane can be connected on the one hand to the valve disk 27 and/or to the rod of the adjustment element 26.

Pressurization of the drive cylinder 32 or piston 33 can be provided by means of a compressed air outlet 34 which is connected to the inner volume of the drive cylinder 32. The compressed air outlet 34 is arranged at the end of a pressure supply channel 35.

The pressure supply channel 35 and, by that, the compressed air outlet 34 is further connected to the pressurization unit 40 and thus provides a connection of the pressurization unit 40 with the drive cylinder 32 for defined pressurization of the drive cylinder 32.

When applying a pressure by the pressurization unit 40 compressed air is pressed in the drive cylinder 32 from below the piston 33 as shown. Hence, increasing pressure causes an increasing counterforce at the piston 33 which acts against the restoring force applied by the spring 29. Due to the connection with the pressurization unit 40, wherein the pressurization unit 40 is configured to provide variable pressure and to vary and set an inside pressure of the drive cylinder, the counterforce can be controlled and varied.

Since the restoring force of the restoring element 29 also changes (increases) when moving the piston 33 upwards, i.e. away from the sealing surface 25 (compression of the spring 29) a position of the piston 33 along the axis V can be adjusted and regulated by changing the inside pressure in the drive cylinder 32.

Such a system provides to control fluid flow through the valve 20 by adjusting the pressure applied at the pneumatic drive of the valve. One advantage of the valve is that there does not need to be any electrical components at the valve and, thus, electromagnetic interaction with a processing element, e.g. a plasma source, can be avoided. This results in more precise and accurate substrate processing while still rapid opening and closing of the valve can be performed using the pneumatics.

The inlet system also enables to vary the fluid pressure in the vacuum chamber and to perform several processing steps by providing a particular pressure course or curve.

Regulation of the valve can be provided by a controlling parameter which can be related to the pressure in the processing chamber, a position of the valve disk or a pressure in the pneumatic drive cylinder. Respective feedback is generated by a respective pressure sensor or by a position sensor.

By that, closed-loop controlling can be done based on the feedback signal and the controlling parameter.

While the invention has been explained in terms of exemplary embodiment(s), many other changes and variations can be made without going beyond the scope of the present invention.

## Claims

1. Gas inlet system (10) for controlled inlet of a fluid into a vacuum process chamber (3), wherein the gas inlet system (10) comprises a gas inlet valve (20) with
• a gas passage unit (21) having a gas inlet (22), a gas outlet (23), and an inner volume (24) connecting the gas inlet (22) and the gas outlet (23), wherein the gas passage unit comprises a sealing surface (25) in the inner volume (24),
• an adjustment element (26) projecting into the inner volume (24) and having a valve disk (27) which is arranged inside the inner volume (24), wherein the adjustment element (26) is movably mounted along an adjustment axis (V) in a closing direction (S) and in an opening direction (O),
• a drive unit (31) which is coupled to the adjustment element (26) outside the gas passage unit (21) and provides an adjustment of the adjustment element (26) along the adjustment axis (V), wherein the valve disk (27) is movable by means of the drive unit (31) in the opening direction (O) into an open position in which the valve disk (27) is spaced from the sealing surface (25) and a fluid flow is provided, and
• a flexible sealing membrane (28) which is attached to the gas passage unit (21) and to the adjustment element (26) and atmospherically separates the drive unit (31) from the inner volume (24),
wherein
• the drive unit (31) comprises a pneumatic drive cylinder (32) having at least one piston (33), wherein the piston (33) is coupled to the adjustment element (26) and an opening force can be generated in the opening direction (O) by pressurization of the drive cylinder (32), and
• the gas inlet valve (20) comprises a restoring element (29) configured and arranged to apply a restoring force on the adjustment element (26) and/or on the piston (33) in a closing direction (S),
**characterized in that**
the gas inlet system (10) comprises
• a pressurization unit (40) connected to the drive cylinder (32) for defined pressurization of the drive cylinder (32), wherein the pressurization unit (40) is configured to provide variable pressure and to vary and set an inside pressure of the drive cylinder (32), and
• a controlling unit (50) configured to
□ receive a controlling parameter providing a target state for the gas inlet system (10), and
□ control the pressurization unit (40) based on the controlling parameter so that the inside pressure of the drive cylinder is varied so that an actual state of the gas inlet system is approached to the target state or corresponds with the target state.

2. Gas inlet system (10) according to claim 1, wherein
the controlling parameter comprises information about a target pressure of the fluid and the actual state indicates a current fluid pressure in the vacuum process chamber (3), in particular wherein the gas inlet system (10) comprises the vacuum process chamber (3) and at least one pressure sensor (13) for determining the fluid pressure.

3. Gas inlet system (10) according to claim 2, wherein
the controlling parameter comprises a fluid supply pressure and the target pressure and the controlling unit (50) is configured to control the pressurization unit (40) so that a defined amount of fluid passes the gas passage unit (21) depending on the fluid supply pressure to approach the target pressure.

4. Gas inlet system (10) according any of the preceding claims, wherein
the controlling parameter comprises information about a target flow factor through the gas inlet valve (20) and the pressurization unit (40) is controlled so that an actual flow factor through the gas inlet valve (20) is approached to the target flow factor or corresponds with the target flow factor.

5. Gas inlet system (10) according to any of the preceding claims, wherein
the controlling parameter comprises a target position of the adjustment element (26) or of the piston (33) and the pressurization unit (40) is controlled so that an actual position of the adjustment element (26) or of the piston (33) is approached to the target position or corresponds with the target position.

6. Gas inlet system (10) according to any of the preceding claims, wherein
• the gas inlet system (10) comprises a position sensor (11) configured to determine the actual position of the adjustment element (26) or of the piston (33) and to provide respective actual position data to the controlling unit (50) and
• the pressurization unit (40) is controlled based on the actual position data and the target position by the controlling unit (50).

7. Gas inlet system (10) according to claim 5 or 6, wherein
the controlling unit (50) is configured to derive an operating state of the flexible sealing membrane (28) and/or of the valve disk (27) based on a relation of an actual inside pressure of the drive cylinder (32) and the actual position.

8. Gas inlet system (10) according to claim 7, wherein
the controlling unit (50) is configured to derive the opening force and to derive a force-distance information related to the valve disk.

9. Gas inlet system (10) according to any of the preceding claims, wherein
the pressurization unit (40) is controlled so that the gas passage unit (21) provides a defined distance between the valve disk (27) and the sealing surface (25).

10. Gas inlet system (10) according to any of the preceding claims, wherein
the controlling parameter comprises a target pressurization value concerning a target inside pressure of the drive cylinder (32) and the pressurization unit (40) is controlled to provide the target inside pressure of the drive cylinder (32).

11. Gas inlet system (10) according to any of the preceding claims, wherein
the controlling unit (50) comprises a monitoring functionality configured to
• collect pressurization data for a defined time period, in particular inside pressure values, and
• derive an operating state of the gas inlet valve based on a comparison of the pressurization data with nominal pressurization data.
